# EUROPÄISCHE PATENTSCHRIFT

(11) **EP 4 756 712 B1**
(45) Veröffentlichungstag und Bekanntmachung des Hinweises auf die Patenterteilung: **23.09.2026**
(21) Anmeldenummer: 24217699.8
(22) Anmeldetag: 05.12.2024
(51) Int. Cl.: G06T 7/20, G06V 20/40

(54) **NEUROMORPHE KAMERA ZUR ÜBERWACHUNG DER FÖRDERUNG VON OBJEKTEN AUF EINEM FÖRDERBAND**
NEUROMORPHIC CAMERA FOR MONITORING CONVEYANCE OF OBJECTS ON A CONVEYOR BELT
CAMÉRA NEUROMORPHIQUE POUR SURVEILLER LE TRANSPORT D'OBJETS SUR UNE BANDE TRANSPORTEUSE

(43) Veröffentlichungstag der Anmeldung: 10.06.2026
(73) Patentinhaber: SICK AG, 79183 Waldkirch (DE)
(72) Erfinder: Müller, Romain, 79252 Stegen (DE); Strohmeier, Dirk, 79312 Emmendingen (DE); Reichert, Andreas, 79241 Ihringen (DE); Schwartzkopff, Tijl, 27283 Verden (DE)

(56) Entgegenhaltungen:
- CN-A- 111 833 320
- CN-B- 116 309 565
- CN-B- 116 580 065
- US-A1- 2024 067 457
- US-A1- 2024 177 484

## Beschreibung

Die vorliegende Erfindung betrifft eine neuromorphe Kamera zur Montage an einer Fördereinrichtung und ein Verfahren zur Verwendung der neuromorphen Kamera an einem Förderband der Fördereinrichtung, um durch das Förderband beförderte Objekte mittels der Kamera zu detektieren und festzustellen, ob Objekte auf dem Förderband tatsächlich befördert werden.

In industriellen Anwendungen werden Kameras in vielfältiger Weise eingesetzt, um Objekteigenschaften automatisch zu erfassen. Eine häufige Erfassungssituation ist die Montage der Kamera über einem Förderband. Die Kamera nimmt während der Relativbewegung des aus Objekten gebildeten Objektstroms auf dem Förderband Bilder auf und leitet in Abhängigkeit der gewonnenen Objekteigenschaften weitere Bearbeitungsschritte ein. Solche Bearbeitungsschritte bestehen beispielsweise in der an das konkrete Objekt angepassten Weiterverarbeitung an einer Maschine, die auf geförderte Objekte einwirkt, oder in einer Veränderung des Objektstroms, indem bestimmte Objekte im Rahmen einer Qualitätskontrolle aus dem Objektstrom ausgeschleust werden oder der Objektstrom in mehrere Teilobjektströme sortiert wird. Als problematisch erweist sich hierbei, dass die Förderung der Objekte als solches nicht unmittelbar überwacht wird. Mit anderen Worten, es wird nicht überprüft, ob Objekte innerhalb der Fördereinrichtung, beispielsweise wenn die Objekte von einem Förderband auf ein weiteres Förderband übergeleitet werden, in dem Übergangsbereich der aneinander angrenzenden Förderbänder hängen geblieben sind. Derartige Übergangsbereiche sind häufig, da Fördereinrichtungen wie beschrieben, zum Sortieren der geförderten Objekte, den Objektstrom in Teilströme unterteilen, wobei die für die Teilströme relevanten Förderbänder dann jeweils unterschiedliche Förderrichtungen aufweisen. Bleibt ein Objekt innerhalb der Fördereinrichtung beispielsweise in dem Übergangsbereich zwischen zwei Förderbändern hängen, wird der Betreiber der Fördereinrichtung nicht darüber informiert und erhält folglich auch keine Information darüber, wo genau das Objekt in der Fördereinrichtung hängengeblieben ist. Selbst wenn die zu fördernden Objekte vorab als "förderfähig" klassifiziert werden, indem beispielsweise sperrige Objekte separat oder manuell befördert werden, kann ein Hängenbleiben der übrigen Objekte nicht ausgeschlossen werden.

Die US 2024/067457 A1 beschreibt ein Verfahren zur Bestimmung der Stabilität eines auf einem Förderband transportieren Objekts. Dabei empfängt eine Steuereinheit eine Bildserie von einer Kamera und die Stabilität des Objekts wird dadurch bestimmt, dass die Bewegungsrichtung des Objektes mit der Förderrichtung des Förderbandes verglichen wird.

Die CN 116 580 065 B beschreibt ein Verfahren und eine Vorrichtung zur optischen Flussbestimmung mithilfe von Event-Kameras. Dabei wird zunächst ein Ereignisbild aufgenommen, aus dem ein entsprechender optischer Flussvektor berechnet wird. Anschließend wird das Intervall für die nächste Bildaufnahme dynamisch angepasst, bei geringem Fluss verlängert, bei hohem Fluss verkürzt, um Rechenaufwand zu reduzieren und gleichzeitig die Genauigkeit zu erhöhen.

Die CN 111 833 320 A beschreibt ein Verfahren und eine Vorrichtung zur Erkennung des Betriebszustands eines Stahlbands. Dabei wird ein Video der Produktionslinie ausgewertet, um Bewegungsvektoren einzelner Pixel im Bereich des laufenden Stahlbands zu bestimmen. Aus dem Gesamtverlauf dieser Vektoren wird der Betriebszustand, insbesondere die Laufrichtung des Bands, abgeleitet. Das Verfahren spart Zeit und Arbeitsaufwand.

Die CN 116 309 565 B beschreibt ein bildverarbeitungsbasiertes Verfahren zur Erkennung von Abweichungen bei hochfesten Förderbändern. Dabei werden Bilddaten in Pixelblöcke unterteilt und deren Bewegungsrichtung sowie Helligkeitsunterschiede analysiert. Durch die Kombination dieser Merkmale wird die Bewegung und mögliche Abweichung des Förderbands präzise erkannt, was die Genauigkeit der Detektion verbessert.

Es ist daher eine Aufgabe der Erfindung, das Befördern von Objekten mittels Förderbänder einer Fördereinrichtung zu überwachen.

Die Aufgabe wird gelöst durch eine neuromorphe Kamera nach Anspruch 1, durch das Verfahren nach Anspruch 8 und das System nach Anspruch 13. Weitere Ausführungsformen sind Gegenstand der abhängigen Ansprüche.

Die erfindungsgemäße neuromorphe Kamera zur Bestimmung, ob Objekte auf einem Förderband gefördert werden, umfasst einen Sichtbereich, der eingerichtet ist, die auf dem Förderband in eine Förderrichtung geförderten Objekte zu erfassen und umfasst ferner eine Datenverarbeitungseinheit, die einen Datenstrom der Kamera auswertet, wobei die Datenverarbeitungseinheit aus dem Datenstrom einen optischen Fluss bestimmt, und aus dem optischen Fluss für ein jeweiliges Objekt der geförderten Objekte eine Bewegungsrichtung ermittelt und ein Signal ausgibt, wenn die ermittelte Bewegungsrichtung außerhalb eines zulässigen Bereichs liegt, der durch die Förderrichtung des Förderbandes bestimmt ist.

Unter einer neuromorphen Kamera ist eine event-basierte Kamera zu verstehen. Die Kamera ist darauf ausgelegt, visuelle Informationen effizienter und schneller zu verarbeiten als herkömmliche Kameras. Anstatt wie eine herkömmliche Kamera kontinuierlich Bilder aufzunehmen, registriert eine neuromorphe Kamera nur Änderungen im Sichtfeld. Dies bedeutet, dass sie nur dann Daten erfasst, wenn sich etwas im Bild bewegt oder verändert. Weil die neuromorphe Kamera deshalb nicht ständig Bilder aufnimmt und verarbeitet, verbraucht eine neuromorphe Kamera weniger Energie als eine herkömmliche Kamera. Die Pixel einer neuromorphen Kamera sind aus einer Vielzahl neuromorpher Sensoren gebildet, die visuelle Daten aufnehmen und umwandeln, so dass ein Datenstrom erzeugt wird, der an eine Datenverarbeitungseinheit geleitet wird, um den Datenstrom z.B. von einem neuronalen Netz zu verarbeiten oder auszuwerten. Das neuronale Netz ist auf Änderungen, z.B. in Helligkeit oder Bewegung trainiert. Jedes Pixel reagiert unabhängig und asynchron auf Änderungen der Helligkeit. Das bedeutet, dass nur dann Daten gesendet werden, wenn sich die Helligkeit an diesem Pixel ändert. Im Vergleich dazu erfassen bei einer konventionellen Kamera alle Pixel gleichzeitig ein Bild und in festen Zeitintervallen, unabhängig davon, ob sich die Helligkeit ändert oder nicht. Folglich sind unter einem Datenstrom die von der Kamera gelieferten Bilddaten zu verstehen.

Unter einem Objekt ist vorliegend ein beliebiger Gegenstand mit unterschiedlichsten Geometrien zu verstehen, der typischerweise auf einem Förderband gefördert wird. Objekte umfassen Pakete, Koffer, etc., welche zylinderförmig, quadratisch, quaderförmig, etc. ausgebildet sein können.

Unter einem Förderband ist vorliegend ein Transportband oder Fließband zu verstehen, welches eine mechanische Vorrichtung darstellt, die dazu dient, Objekte kontinuierlich von einem Punkt zum anderen zu befördern. Es weist ein Band auf, das angetrieben über Rollen oder über eine Oberfläche läuft, auf der die zu befördernden Objekte positioniert sind. Befördern meint somit den Transport der Objekte. Die Objekte werden auf dem Förderband gefördert, wenn sich die Objekte im Wesentlichen in die Förderrichtung des Förderbandes bewegen. Im Wesentlichen in Förderrichtung bezieht sich darauf, dass die Bewegungsrichtung der Objekte innerhalb eines zulässigen Bereichs liegt, der durch die Förderrichtung des Förderbandes bestimmt ist. Unter einem zulässigen Bereich ist insbesondere ein Toleranzwinkelbereich, um die Förderrichtung zu verstehen, der eine Abweichung der Bewegungsrichtung eines Objektes von der Förderrichtung des Förderbandes als zulässig oder nicht zulässig klassifiziert. Unzulässig wäre es beispielsweise, wenn die Bewegungsrichtung des Objektes umgekehrt zur Förderrichtung wäre, d.h. 180° zur Förderrichtung, wobei die Förderrichtung in Richtung 0° angenommen wird. Die geförderten Objekte umfassen alle auf dem Förderband geförderten Objekte, wobei ein hängengebliebenes Objekt durch das Förderband zwar weiterbewegt werden kann, es wird im Sinne der vorliegenden Anmeldung aber nicht weiter in Förderrichtung ge- oder befördert.

Die Kamera weist einen Sichtbereich auf, der eingerichtet ist, die auf dem Förderband in eine Förderrichtung geförderten Objekte zu erfassen. Insofern bezieht sich der Sichtbereich auf einen Erfassungsbereich der Kamera, d.h. auf einen Bereich, in dem die Kamera Objekte erfassen und analysieren kann. Der Sichtbereich hängt von der Optik der Kamera ab und kann durch Verwendung unterschiedlicher Optiken vergrößert oder verkleinert werden.

Unter einer Datenverarbeitungseinheit ist vorliegend eine spezialisierte Hardware-Einrichtung oder ein Software-Framework zu verstehen, die bzw. das bevorzugt für die Verarbeitung eines vortrainierten neuronalen Netzes ausgelegt ist, wobei die Datenverarbeitungseinheit Teil der Kamera ist, beispielsweise räumlich in das Gehäuse der Kamera integriert sein kann, so dass die Kamera in diesem Fall als ein Edge-Device ausgebildet ist. Die Datenverarbeitungseinheit kann sich alternativ auch räumlich außerhalb der Kamera bzw. des Kameragehäuses befinden. Die Datenverarbeitungseinheit bestimmt den optischen Fluss aus dem Datenstrom der Kamera.

In der Ausführung als ein Edge-Device verfügt die Datenverarbeitungseinheit über genügend Rechenleistung, um ein neuronales Netz nach dem Deployment des Netzes feinabzustimmen. Mit anderen Worten, das Netz ist bevorzugt vortrainiert, wodurch die Implementierungszeit verkürzt wird, und die Implementierung vereinfacht wird. Die Datenverarbeitungseinheit ist in der Ausführungsform als ein Edge Device so ausgelegt, dass sie eine hohe Rechenleistung bei geringem Energieverbrauch bietet. Darüber hinaus ist die Datenverarbeitungseinheit vorzugsweise klein und leicht, damit sie in das Gehäuse der Kamera passt, was die Integration in einen kleinen Formfaktor, wie z.B. ein System-on-Chip, erfordern kann. Die Datenverarbeitungseinheit ermöglicht die Verarbeitung des Datenstroms der Kamera in Echtzeit. Dies erlaubt der Datenverarbeitungseinheit die Bestimmung des optischen Flusses aus dem Datenstrom der Kamera, bevorzugt mittels eines darauf trainierten neuronalen Netzes. Durch die Verarbeitung der Daten direkt auf dem Edge-Gerät wird die Latenz vorteilhaft reduziert und die Notwendigkeit minimiert, große Datenmengen an zentrale Server zu senden. Ein Beispiel für eine solche erste Datenverarbeitungseinheit ist der NVIDIA Jetson Orin.

Die Datenverarbeitungseinheit bestimmt den optischen Fluss aus dem Datenstrom der Kamera. Unter dem optischen Fluss ist vorliegend die scheinbare Bewegung von Objekten, Kanten und Oberflächen in einer visuellen Szene zu verstehen, die von der Kamera registriert wird. Mit anderen Worten, die Bewegung der auf dem Förderband positionierten Objekte durch das Förderband, wobei auch das hängengebliebene Objekt sich, durch die Bewegung des Förderbands angetrieben, weiterhin bewegen kann, aber nicht weiter in Förderrichtung des Förderbandes befördert wird. Der optische Fluss wird durch die relative Bewegung zwischen der Kamera und den Objekten verursacht und unterscheidet deshalb nicht zwischen der Bewegung der Objekte oder einer Änderung der Bewegung der Kamera. Der optische Fluss ist durch ein zweidimensionales Vektorfeld dargestellt, in dem jeder Vektor die Verschiebung von Punkten von einem Bild bzw. Aufnahmezeitpunkt der Kamera zum nächsten darstellt.

Die erfindungsgemäße Kamera hat den Vorteil, dass bei Veränderungen im Sichtfeld kontinuierlich ein Datenstrom erzeugt wird und die darauf basierte kontinuierliche Auswertung des optischen Flusses, die kontinuierliche Überwachung der Förderung der Objekte in der Fördereinrichtung erlaubt. Ferner ist aufgrund der event-basierten Verarbeitung der Energieverbrauch der Kamera gering. Ferner erfassen neuromorphe Kameras auch sehr schnelle Bewegungen, da sie nicht durch die Bildrate herkömmlicher Kameras begrenzt sind, was eine hohe Flexibilität an unterschiedliche Förderbandgeschwindigkeiten bewirkt. Zudem verfügt die Kamera über einen hohen Dynamikbereich, was es vorteilhaft erlaubt, sehr helle als auch sehr dunkle Szenen gleichermaßen ohne zusätzliche adaptive optische Bauelemente zu erfassen, was ideal für Anwendungen in wechselnden Lichtverhältnissen ist, wie sie in Fördereinrichtungen regelmäßig auftreten.

Die Datenverarbeitungseinheit der neuromorphen Kamera umfasst mindestens ein neuronales Netz, wobei das neuronale Netz aus dem Datenstrom der Kamera den optischen Fluss bestimmt, so dass einem Pixel der Kamera ein jeweiliger Flussvektor zugeordnet ist.

Die Datenverarbeitungseinheit umfasst ein neuronales Netz, welches in der Lage ist, den optischen Fluss aus dem Datenstrom der Kamera zu berechnen. Unter einem Flussvektor ist vorliegend ein Vektor des zweidimensionalen Vektorfelds des optischen Flusses zu verstehen, wobei die Auflösung des Vektorfeldes so ausgestaltet ist, dass einem Pixel ein Vektor zugeordnet sein soll.

Das Vektorfeld bildet die für den jeweiligen Pixel bestimmte Bewegungsrichtung und Bewegungsgeschwindigkeit oder auch Bewegungsmagnitude ab. Das Vektorfeld kann auf das Koordinatensystem der Kamera bezogen sein. In diesem Fall stimmt die Förderrichtung des Förderbandes nicht notwendigerweise mit der Richtung einer der Hauptachsen des Koordinatensystems der Kamera überein. In diesem Fall kann die Datenverarbeitungseinheit, für eine vereinfachte weitere Auswertung des Datenstroms, das Vektorfeld auf die Förderrichtung des Förderbands mittels Koordinatentransformation, z.B. Drehmatrix und Translationsmatrix, transformieren.

Das neuronale Netz ist bevorzugt als ein *"spiking neural network"(SNN)* ausgebildet, d.h. als ein neuronales Netz, welches verglichen mit anderen neuronalen Netzen nicht kontinuierlich Daten verarbeitet, sondern eine Spike basierte Auswertung aufweist. Da die Neuronen nur dann ein Signal ausgeben, wenn ein Schwellwert überschritten wird, ist das SNN an den event-basierten Datenstrom der neuromorphen Kamera angepasst. Daraus ergibt sich ein geringer Rechenaufwand und Energieverbrauch der Datenverarbeitungseinheit, was die Auswertung des Datenstroms in Echtzeit vorteilhaft erlaubt. Das neuronale Netz kann unterschiedliche kommerzielle oder open-source Werkzeuge umfassen. Die Netzwerkarchitektur ist vorteilhaft an die Netzwerk Architektur von *"TimeLens"* angepasst, die für die event-basierte Video-Frame Interpolation entwickelt wurde. Eine mögliche Umsetzung einer solchen Architektur zur Berechnung des optischen Flusses aus dem Datenstrom der event-basierten Kamera ist in "Y. Schnider et al., "Neuromorphic Optical Flow and Real-time Implementation with Event Cameras," 2023 IEEE/CVF Conference on Computer Vision and Pattern Recognition Workshops (CVPRW), Vancouver, BC, Canada, 2023, pp. 4129-4138, doi: 10.1109/CVPRW59228.2023.00434" beschrieben.

In einer besonders bevorzugten Ausführungsform der neuromorphen Kamera bestimmt die Datenverarbeitungseinheit das jeweilige Objekt, indem Pixel, deren Flussvektoren eine ähnliche Magnitude und Richtung aufweisen, zu dem jeweiligen Objekt gruppiert werden. Die Gruppierung kann nach dem K-Means oder bevorzugt nach dem DBSCAN Verfahren erfolgen.

Bei der Bestimmung von Objekten aus dem optischen Fluss und um diese von dem Hintergrund der optischen Szene zu trennen, wird die Bewegung der Objekte segmentiert, d.h. die Bewegungsvektoren werden analysiert, um Bereiche zu identifizieren, d.h. Cluster, die sich relativ zum Hintergrund ähnlich bewegen und somit den jeweiligen Objekten entsprechen. In einer Ausführungsform kann dies durch den sogenannten K-Means Algorithmus umgesetzt sein. Der Algorithmus beginnt mit einer zufälligen Auswahl von K initialen Clusterzentren. Mit anderen Worten, es wird eine Anzahl von Clustern, d.h. von Objekten im Sichtfeld, vordefiniert. Diese Zentren repräsentieren die anfänglichen Schätzungen der verschiedenen Bewegungssegmente im zweidimensionalen Vektorfeld des optischen Flusses. Die Zuweisung der Pixel anhand von Richtung und evtl. auch Magnitude der jeweiligen Flussvektoren zu einem jeweiligen Clusterzentrum erfolgt dabei bevorzugt abstandsabhängig, beispielsweise basierend auf einer euklidischen Metrik. Die Zuweisung kann zusätzlich auch auf der Magnitude der Flussvektoren basierend erfolgen, wobei zueinander benachbarte Pixel, d.h. Pixel, die kurze Abstände zueinander aufweisen, ein jeweiliges Clusterzentrum bilden. Nachdem alle Pixel einem Clusterzentrum zugewiesen sind, werden die Clusterzentren neu berechnet. Bei der neuen Berechnung wird der Mittelwert der Flussvektoren und/oder der Bewegungsmagnitude innerhalb eines Clusterzentrums gebildet. Die Abstände zwischen den Pixeln und den Mittelwerten werden bestimmt und die Pixel werden dann den Abständen entsprechend und/oder der Magnitude entsprechend den jeweiligen Clustern zugewiesen. Die Schritte der Zuweisung und der Neuberechnung der Mittelwerte werden wiederholt, bis sich die Clusterzentren nicht mehr signifikant ändern und/oder bis eine vorgegebene Anzahl von Iterationen erreicht ist. Am Ende des hier beschriebenen Verfahrens sind die Pixel des optischen Flusses in K Clusterzentren oder in K Bereiche segmentiert, die jeweils verschiedene Bewegungssegmente darstellen, wobei die jeweiligen Bewegungssegmente den jeweiligen Objekten entsprechen. Dabei werden die Objekte als zusammenhängend angenommen, d.h die Objekte sollen durch ein stetiges Richtungs-Geschwindigkeits-Vektorfeld beschreibbar sein, wenn sie auf dem Förderband transportiert werden.

Eine sinnvolle Alternative zu dem K-Means Algorithmus, stell das DBSCAM (Density-Based Spatial Clustering of Application with Noise) Verfahren dar. Das Verfahren weist die folgenden Schritte auf: In einem ersten Schritt erfolgt eine Parametrisierung. Dabei werden zumindest die folgenden beiden Parameter bestimmt. Der maximale Abstand zwischen zwei Pixeln, damit sie als Nachbarn betrachtet werden, z.B. als ε-Abstand. Die minimale Anzahl von Pixeln, die innerhalb des ε-Radius liegen müssen, damit ein Pixel als ein Kernpixel betrachtet wird, z.B. MinPix. Als ein Kernpixel wird ein Pixel betrachtet, dass mindestens über MinPix verfügt. Als ein Randpixel wird ein Pixel betrachtet, dass innerhalb des ε-Abstandes liegt, aber kein Kernpixel ist. Als ein Rauschpixel, wird ein Pixel betrachtet, das weder einen Kernpixel noch einen Randpixel bildet. Der Algorithmus beginnt wie auch K-Means an einem beliebigen Pixel. Alle Nachbarn des Pixels werden dem Cluster hinzugefügt und es wird geprüft, ob sie Kernpunkte darstellen. Wenn die Pixel Kernpunkte darstellen, werden die Nachbarn des jeweiligen Kernpixels ebenfalls dem Cluster hinzugefügt. Dieser Prozess wird rekursiv fortgesetzt, so dass am Ende alle Pixel bewertet worden sind. Der DBSCAN ist die bevorzugte Ausführungsform, da die Anzahl von Clustern, d.h. von Objekten im Sichtfeld der Kamera, nicht im Voraus festgelegt werden muss. Das Verfahren selektiert Rauschpixel automatisch aus. Damit wird die Objekterkennung robuster gegenüber Rauschen, d.h. einem niedrigen Signal zu Rausch Verhältnis, wie dies bei wechselnden Lichtverhältnissen der Fall sein kann oder bei einer insgesamt schwachen Beleuchtung zumindest im Erfassungsbereich der Kamera.

In einer besonders bevorzugten Ausführungsform der neuromorphen Kamera bestimmt die Datenverarbeitungseinheit die Bewegungsrichtung des jeweiligen Objektes durch Mittelwertbildung, indem die Datenverarbeitungseinheit über die Richtungen der Flussvektoren der zu dem jeweiligen Objekt gruppierten Pixel mittelt.

Die Mittelung über die Flussvektoren eines jeweiligen Objektes zur Bestimmung der Bewegungsrichtung des jeweiligen Objektes kann einen Schwellwert umfassen, durch den festgelegt wird, welche Bewegungsmagnituden der Flussvektoren, d.h. welche Geschwindigkeiten, bei der Bestimmung der Bewegungsrichtung nicht mehr oder gerade eben relevant sein sollen. Beispielsweise werden nur Bewegungsmagnituden berücksichtigt, die ausgehend von einer für das Objekt aus dem optischen Fluss bestimmten maximalen Bewegungsmagnitude, eine bis zu 50%, 40%, 30%, 20% oder 10% geringere Bewegungsmagnitude aufweisen. Mit anderen Worten, die Mittelung der Bewegungsrichtung basiert auf denjenigen Flussvektoren des Objektes, die eine Bewegungsmagnitude z.B. 90 - 100%. 80 - 100%, 70 - 100% oder 60 - 100% der berechneten maximalen Bewegungsmagnitude aufweisen. Damit lassen sich vorteilhaft kleine Bewegungsmagnituden, die z.B. einem Rauschpixel entsprechen, vorteilhaft aussortieren.

In einer besonders bevorzugten Ausführungsform der neuromorphen Kamera ist der Mittelwert aus einer Verteilung, insbesondere aus einer Gauß Verteilung, gebildet, und die Verteilung ist an die Richtungen der Flussvektoren der zu dem jeweiligen Objekt gruppierten Pixel angepasst.

In dieser Ausführungsform ist die Gaußverteilung als eine Funktion der Winkel α der Richtungen der Flussvektoren ausgebildet, so dass die Gaußverteilung die Verteilung der Winkel α und als eine Fitfunktion parametrisiert, so dass die an die Verteilung der Winkel α der Richtungen der Flussvektoren angepasste Gaußverteilung den Mittelwert als Standardverteilung der Gaußverteilung enthält.

In einer besonders bevorzugten Ausführungsform der neuromorphen Kamera bestimmt die Datenverarbeitungseinheit die Förderrichtung aus den Bewegungsrichtungen von mindestens zehn geförderten Objekten, indem die Datenverarbeitungseinheit über die Richtungen der Flussvektoren der zu den jeweiligen Objekten gruppierten Pixeln mittelt.

In dieser Ausführungsform muss die Bewegungsrichtung des Förderbandes der Fördereinrichtung nicht bekannt sein, sondern wird durch die neuromorphe Kamera selbst bestimmt. Dies bietet den großen Vorteil, dass wenn die Kamera im Nachhinein an die Fördereirichtung angebracht werden soll, keine zusätzliche Sensorik zur Feststellung der Förderrichtung notwendig ist, oder diese über eine zu definierende Schnittstelle zwischen einer Datenverarbeitungseinheit der Fördereinrichtung und der Datenverarbeitungseinheit der Kamera ausgetauscht werden muss, z.B. als ein Parameter der Fördereinrichtung. Die Bewegungsrichtung kann aus mindestens 10 oder aus 10 oder aus mindestens 15 oder aus 15 oder aus mindestens 20 oder aus 20 geförderten, d.h. transportieren Objekten, bestimmt sein.

In einer besonders bevorzugten Ausführungsform der neuromorphen Kamera umfasst der zulässige Bereich Förderwinkel von 0° bis +/- 15°, 0° bis +/- 25°, 0° bis +/- 35°, 0° bis +/- 45° oder 0° bis +/- 50°, wobei ein Förderwinkel von 0° der Förderrichtung entspricht.

Der zulässige Förderwinkel bildet einen Winkelbereich. Der Winkelbereich kann durch Angabe eines Bereichs zwischen +/- 180 definiert sein. Alternativ kann der Winkelbereich durch Angabe eines Bereichs zwischen 0° und 360° definiert sein. In diesem Fall wäre der zulässige Förderwinkel von, z.B. +/- 15°, durch die Winkelbereichsangabe von 15° und 345° gleichermaßen bestimmt.

Die Erfindung betrifft auch ein Verfahren, bei dem eine neuromorphe Kamera nach Anspruch 1 verwendet wird, um zu bestimmen, ob Objekte auf einem Förderband einer Fördereinrichtung gefördert werden, indem die Kamera so an dem Förderband positioniert wird, dass die auf dem Förderband in die Förderrichtung geförderten Objekte sich durch einen Sichtbereich der Kamera bewegen und die Kamera ein Signal ausgibt, wenn die Bewegungsrichtung eines jeweiligen Objektes der geförderten Objekte außerhalb eines durch die Förderrichtung des Förderbands bestimmten zulässigen Bereichs liegt.

In einer bevorzugten Ausführungsform des Verfahrens wird die Kamera so an dem Förderband positioniert, dass eine Achse des Koordinatensystems der Kamera mit der Förderrichtung übereinstimmt.

Die Positionierung der Kamera an dem Förderband in der beanspruchten Weise, erspart eine zusätzliche Transformation des von der Kamera gelieferten Datenstroms auf das Koordinatensystem, in welchem die Förderrichtung entlang einer Hauptachse des Koordinatensystems verläuft, z.B. der Y-Richtung. Durch die vorteilhafte Ausrichtung der Kamera wird die Berechnung des optischen Flusses vereinfacht.

In einer bevorzugten Ausführungsform des Verfahrens wird ein Mittel, insbesondere ein Drehgeber, zur Bestimmung einer Fördergeschwindigkeit des Förderbandes an dem Förderband positioniert.

Ist die Fördergeschwindigkeit des Förderbandes bekannt, d.h. die Transportgeschwindigkeit des Förderbandes im Erfassungsbereich der Kamera ist bekannt, so kann die Bewegungsmagnitude der jeweiligen Flussvektoren der jeweiligen Pixel skaliert werden. Damit ist leichter abschätzbar, welche Geschwindigkeit, beispielsweise für eine Berechnung des Mittelwertes der Bewegungsrichtungen eines Objektes durch die Datenverarbeitungseinheit, verwendet werden sollen. Ebenso können die Geschwindigkeiten bzw. die Flussvektoren der jeweiligen Objekte miteinander verglichen werden. Ebenso können Veränderungen in der Geschwindigkeit des Förderbandes in die Auswertung des Datenstrom einbezogen werden.

In einer bevorzugten Ausführungsform des Verfahrens löst ein Signalgeber, insbesondere eine Lichtschranke, den Datenstrom der Kamera aus. Der Signalgeber wird dazu an dem Förderband und vor dem Sichtbereich der Kamera positioniert angebracht.

In dieser Ausführungsform ist die Berechnung des optischen Flusses durch die Datenverarbeitungseinheit auf die Zeit beschränkt, in der Objekte auf dem Förderband auch transportiert werden. Dies bewirkt eine weitere Reduzierung des Energieverbrauchs.

In einer bevorzugten Ausführungsform des Verfahrens wird ein Signal zu Rausch Verhältnis durch eine Beleuchtungseinheit bestimmt, die den Sichtbereich der Kamera beleuchtet. Dazu wird die Beleuchtungseinheit an dem Förderband positioniert angebracht. Alternativ kann die Beleuchtungseinheit auch unmittelbar an der Kamera positioniert angebracht sein, so dass durch die Montage der Kamera an dem Förderband die Beleuchtung des Sichtfeldes der Kamera sozusagen automatisch richtig positioniert erfolgt.

Die Erfindung betrifft ferner ein System, aufweisend die neuromorphe Kamera nach Anspruch 1 und ein Förderband einer Fördereinrichtung, wobei die Kamera so an dem Förderband positioniert ist, dass Objekte, die auf dem Förderband in eine Förderrichtung bewegt werden, sich durch den Sichtbereich der Kamera bewegen und deshalb von der Kamera erfasst werden. Der Datenstrom der Kamera erlaubt daher eine Erkennung und/oder eine Verfolgung der Objekte, indem die Datenverarbeitungseinheit der Kamera den optischen Fluss bestimmt.

In einer bevorzugten Ausführungsform umfasst das System ferner einen Signalgeber, insbesondere eine Lichtschranke, eine Beleuchtungseinheit und ein Mittel, insbesondere einen Drehgeber, zur Bestimmung der Fördergeschwindigkeit des Förderbands.

In einer bevorzugten Ausführungsform umfasst das System ferner einen Höhensensor, welcher eingerichtet ist, die Höhe der Objekte im Sichtbereich der Kamera zu bestimmen. In dieser Ausführungsform kann der optische Fluss basierend auf der Höhe der Objekte korrigiert werden. Das Merkmal ergibt sich daraus, dass der optische Fluss vom Abstand der Objekte zur Kamera abhängig ist. Weiter entfernte Objekte erscheinen sich langsamer zu bewegen als näher an der Kamera positionierte Objekte. Die sich daraus ergebende unterschiedliche Winkelgeschwindigkeit bei tatsächlicher gleicher Fördergeschwindigkeit der Objekte in die Förderrichtung ist somit korrigierbar.

Weitere bevorzugte Ausgestaltungen der erfindungsgemäßen neuromorphen Kamera ergeben sich aus der nachfolgenden Beschreibung der Ausführungsbeispiele in Zusammenhang mit den Figuren und deren Beschreibung. Gleiche Bauteile werden im Wesentlichen durch gleiche Bezugszeichen gekennzeichnet, falls dies nicht anders beschrieben wird oder sich nicht anders aus dem Kontext ergibt.
Fig. 1 zeigt eine schematische Darstellung der erfindungsgemäßen neuromorphen Kamera.
Fig. 2 zeigt eine schematische Darstellung eines Förderbandes mit einem Übergangsbereich und zwei Objekten, wobei eines der Objekte in dem Übergangsbereich hängengeblieben ist. Die Bewegungsrichtungen der Objekte sind durch Pfeile angedeutet.
Fig. 3 zeigt eine schematische Darstellung einer Fördereinrichtung. Die Fördereinrichtung umfasst eine neuromorphe Kamera, einen Signalgeber und eine Beleuchtungseinheit. Eines von zwei geförderten Objekten ist in einem Übergangsbereich des Förderbandes hängengeblieben.

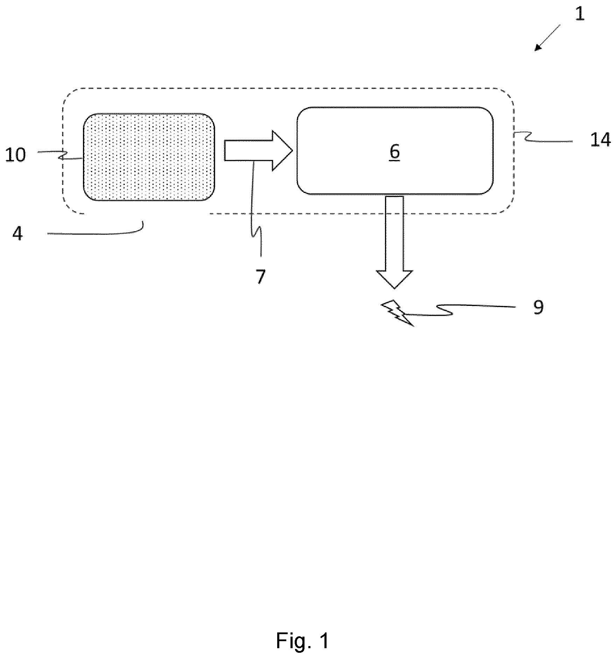

In Fig. 1 ist eine schematische Darstellung der erfindungsgemäßen neuromorphen Kamera 1 dargestellt. In dieser Ausführungsform der Kamera 1 sind in einem Gehäuse 14 der Kamera 1 eine Datenverarbeitungseinheit 6 und eine bestimmte Anzahl von neuromorphen Sensoren, die als Pixel 10 ausgebildet sind, angeordnet. Die von den Pixeln 10 erfassten optischen Signale werden als Daten in Form eines Datenstroms 7 an die Datenverarbeitungseinheit 6 zur Weiterverarbeitung geleitet. Die Datenverarbeitungseinheit 6 wertet den Datenstrom aus, indem die Datenverarbeitungseinheit 6 aus dem Datenstrom 7 den optischen Fluss bestimmt. Der optische Fluss kann beispielsweise mittels bekannter Methoden, wie der Lucas-Kanade-Methode, der Horn-Schuck-Methode, oder neuronalen Methoden wie dem Reichardt-Detektor bestimmt werden. Erfindungsgemäß bestimmt die Datenverarbeitungseinheit 6 den optischen Fluss mit Hilfe eines neuronalen Netzes, insbesondere mit Hilfe eines "spiking neural network" (SNN). Es können aber auch "nicht-spikende" neuronale Netze gleichermaßen angewendet werden. Der optische Fluss beschreibt die Richtung und Geschwindigkeit der Objekte 2, die sich durch den Sichtbereich 4 der Kamera 1 bewegen. Die Bestimmung des optischen Flusses nach der Lukas-Kanade-Methode kann die folgenden Verfahrensschritte umfassen. In einem ersten Schritt werden Merkmale im Bild identifiziert. In einem zweiten Schritt wird die Bewegung dieser Merkmale zwischen aufeinanderfolgenden Events der Kamera 1 geschätzt, indem Intensitätsänderungen in kleinen Bildausschnitten analysiert werden. Die Lukas-Kanade-Methode minimiert nun eine Fehlerfunktion, die die Differenz zwischen Intensitäten der Merkmale in den aufeinanderfolgenden Events der Kamera 1 darstellt. Die Datenverarbeitungseinheit 6 ist eingerichtet, ein neuronales Netz zu "deployen", insbesondere ein SNN. Dabei kann die Bestimmung des optischen Flusses durch ein SNN die folgenden Verfahrensschritte umfassen: In einem ersten Schritt erfolgt die Eingabe von Ereignisdaten, welche vorliegend durch den Datenstrom 7 ausgebildet ist. Die Kamera 1 erfasst Änderungen in der Helligkeit an jedem Pixel 10 und sendet diese als Spikes und in Form des kontinuierlichen Datenstromes 7 an die Datenverarbeitungseinheit 6. Diese Spikes repräsentieren die zeitlichen Änderungen im Bild oder anders ausgedrückt, im Sichtbereich 4 der Kamera 1. In einem nächsten Schritt erfolgt eine Vorverarbeitung der Daten des Datenstroms. Die eingehenden Spikes werden in ein geeignetes Format umgewandelt, das vom SNN verarbeitet werden kann. Dies kann die Normalisierung der Daten oder die Umwandlung in eine Spike-Zeit-Darstellung umfassen. Ein weiterer Schritt umfasst die Merkmals Extraktion. Dabei extrahiert das SNN relevante Merkmale aus den eingehenden Spikes. Dies geschieht durch mehrere Schichten von Neuronen, die auf Spikes reagieren und Muster erkennen. Darauf folgt ein Schritt, der eine zeitliche Integration der Daten umfasst. Dabei wird die zeitliche Dynamik der Spikes durch spezielle neuronale Schichten des SNN integriert, die die zeitlichen Abfolgen der Ereignisse berücksichtigen. Dies ermöglicht es dem SNN, Bewegungsmuster zu erkennen. Anschließend erfolgt ein Schritt, in dem der optische Fluss berechnet wird. Basierend auf den extrahierten Merkmalen und der zeitlichen Integration berechnet das SNN den optischen Fluss. Dies geschieht durch die Vorhersage der Bewegungsrichtung 8 und der Geschwindigkeit für jeden der Pixel 10.

Die Datenverarbeitungseinheit 6 ist dazu eingerichtet, ein vortrainiertes neuronales Netz zu "deployen". Allgemein soll durch die Verwendung des Begriffs "Deployment" der Prozess bezeichnet sein, bei dem ein trainiertes Modell, welches durch ein neuronales Netz ausgeführt wird, von der Entwicklungsumgebung in eine Produktionsumgebung überführt wird. Dies bedeutet, dass das Modell, bzw. das neuronale Netz, nach dem Training und der Validierung bereitgestellt wird, um in realen Anwendungen genutzt zu werden. Wird ein vortrainiertes neuronales Netz auf der Datenverarbeitungseinheit 6 Kamera 1 installiert, dann ist die Kamera 1 bevorzugt als ein Edge-Device ausgebildet, so dass die Datenverarbeitungseinheit 6 ausgebildet ist, indem die Datenverarbeitungseinheit 6 z.B. über genügend Rechenleistung verfügt, um das installierte neuronale Netz auf die Anwendung an dem Förderband 3 spezifisch fein abzustimmen. Die Datenverarbeitungseinheit 6 kann auch dazu eingerichtet sein, das neuronale Netz grundsätzlich zu trainieren. Während des Trainings wird eine Verlustfunktion verwendet, die den Unterschied zwischen dem vorhergesagten und dem tatsächlichen optischen Fluss minimiert. Dies kann durch überwachte oder selbstüberwachte Lernmethoden erfolgen. Das SNN wird schließlich durch Optimierungsalgorithmen wie Stochastic Gradient Descent (SGD) angepasst, um die Genauigkeit der Flussvorhersagen zu verbessern. Nach dem Training kann das SNN den optischen Fluss in Echtzeit berechnen und ausgeben, basierend auf den eingehenden Spikes der Kamera 1.

In einem weiteren Schritt ermittelt die Datenverarbeitungseinheit 6 die Bewegungsrichtung 8 für ein jeweiliges Objekt 2. Dabei gibt die Datenverarbeitungseinheit 6 ein Signal 9 aus, wenn die ermittelte Bewegungsrichtung 8 außerhalb eines zulässigen Bereichs liegt, der durch die Förderrichtung 5 des Förderbandes 3 bestimmt ist. Das Signal 9 kann ein akustisches Signal sein, das Signal kann auch ein digitales Signal an eine Datenverarbeitungseinheit der Fördereinrichtung 15 sein. Ferner kann das Signal ein Bild des Sichtbereichs 4 der Kamera 1 umfassen, so dass ein Bediener der Fördereinrichtung 15 anhand des Bildes eine Vorstellung von dem Objekt 2 bekommt, dessen Bewegungsrichtung 8 außerhalb des zulässigen Bereichs, d.h. außerhalb des Toleranzbereichs des Förderbandes 3 in dem von der Kamera 1 überwachten Förderabschnitt des Förderbandes 3 liegt. Die Datenverarbeitungseinheit 6 bestimmt die Bewegungsrichtung 8 und die Bewegungsgeschwindigkeit bzw. die Bewegungsmagnitude eines Objektes 2 über das Vektorfeld des optischen Flusses, durch welches jedem Pixel 10 ein Flussvektor zugeordnet ist. Um die einem Objekt 2 entsprechenden Flussvektoren 11 auch dem jeweiligen Objekt 2 zuordnen zu können, wird ein jeweiliges Objekt 2 im optischen Fluss durch die Datenverarbeitungseinheit 6 erkannt. Die Erkennung basiert bevorzugt auf dem DMSCAM Verfahren. Die Datenverarbeitungseinheit 6 ist Teil der Kamera 1, damit ist gemeint, dass die Datenverarbeitungseinheit 6 in das Gehäuse 14 der Kamera 1 bevorzugt integriert ist, d.h. die Kamera 1 bevorzugt als ein Edge Device ausgebildet ist. Alternativ kann sich die Datenverarbeitungseinheit 6 aber auch außerhalb des Gehäuses 14 der Kamera 1 befinden und dennoch einen Teil der Kamera 1 bilden.

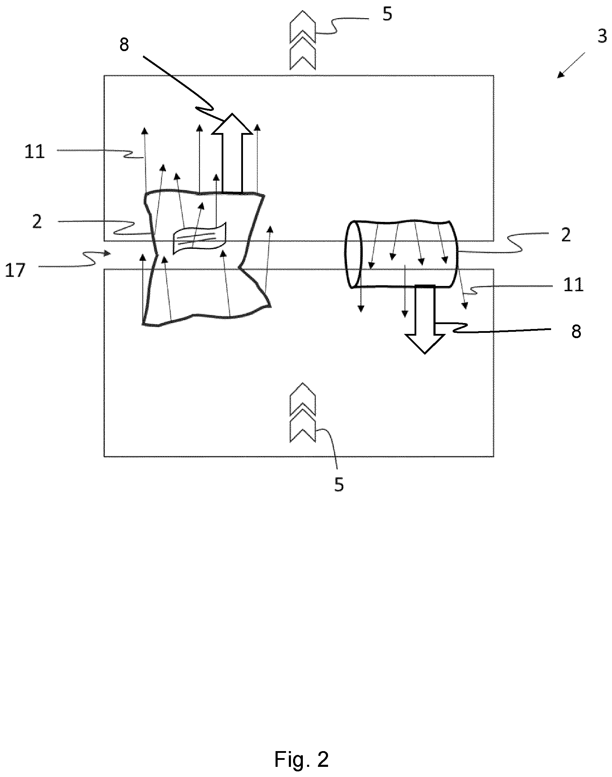

Fig. 2 zeigt eine schematische Darstellung eines Förderbandes 3 mit einem Übergangsbereich 17 und zwei Objekten 2, wobei eines der Objekte 2 in dem Übergangsbereich 17 hängengeblieben ist. Die Bewegungsrichtungen 8 der Objekte 2 sind durch Pfeile angedeutet. Das in Förderrichtung 5 linke Objekt 2 wird aufgrund seiner Kontur über den Übergangsbereich 17 hinweg befördert, während das in Förderrichtung 5 rechte Objekt 2 aufgrund seiner zylinderförmigen Kontur im Übergangsbereich 17 in eine Eigenrotation versetzt wird und somit im Übergangsbereich 17 hängen bleibt. Die Datenverarbeitungseinheit 6 ermittelt die Bewegungsrichtungen 8 beider Objekte 2. In der in Fig. 2 gezeigten Darstellung sind die Bewegungsrichtungen 8 der Objekte 2 als jeweilige Pfeile dargestellt, deren Länge der Bewegungsmagnitude der Objekte 2 entspricht. Oder anders ausgedrückt, die Pfeile zeigen diejenigen Flussvektoren 11 des optischen Flusses, welche eine bestimmte Bewegungsmagnitude aufweisen. D.h. zur Übersicht werden nicht alle Flussvektoren 11 dargestellt, sondern nur solche, die beispielsweise Geschwindigkeiten oberhalb einer vorgegebenen Bewegungsmagnitude aufweisen. Die Pfeile des hängengebliebenen und in Förderrichtung 5 rechten Objekts 2, sind im Wesentlichen entgegen der Förderrichtung 5 weisend, so dass die Bewegungsrichtung 8 des rechten Objekts 2, welche in Fig. 2 durch einen großen Pfeil angedeutet ist, außerhalb eines Toleranzbereichs der Förderrichtung 5 der Fördereinrichtung 15 liegt. Im Vergleich dazu weisen die, durch die eingeführte Skalierung selektierten Flussvektoren 11 des linken Objekts 2, im Wesentlichen in Förderrichtung 5, weshalb sich die Bewegungsrichtung 8 innerhalb des Toleranzbereichs befindet und die Bewegungsrichtung 8 ist durch einen großen Pfeil in Fig. 2 angedeutet. In einer Ausführungsform umfasst das Signal 9 der Datenverarbeitungseinheit 6 ein Bild, welches die in Fig. 2 gewählte durch die Bewegungsmagnitude skalierte Darstellung der Flussvektoren 11 eines jeweiligen Objekts 2 aufweist. Das Bild kann zusätzlich die aus den Flussvektoren 11 gemittelte Bewegungsrichtung 8 der jeweiligen Objekte 2 umfassen, d.h. die beiden in Fig. 2 dargestellten großen Pfeile der Objekte 2.

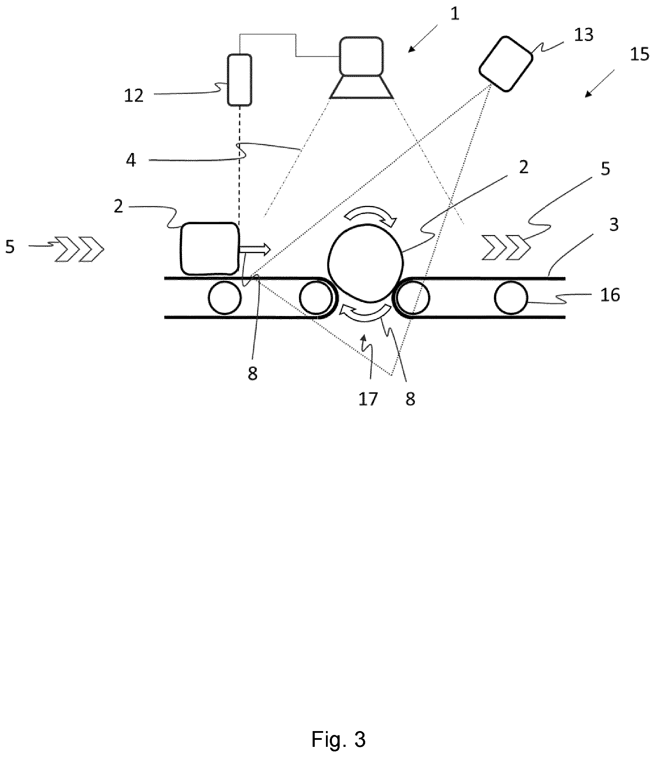

Fig. 3 zeigt eine schematische Darstellung einer Fördereinrichtung 15. Die Fördereinrichtung 15 umfasst die neuromorphe Kamera 1, die in Fig. 3 als ein Edge-Device ausgebildet sein soll, d.h. die Datenverarbeitungseinheit 6 ist im Gehäuse 14 der Kamera 1 untergebracht. Die Fördereinrichtung 15 umfasst ferner einen Signalgeber 12, der als eine Lichtschranke in Fig. 3 ausgebildet ist. Die Lichtschranke 12 weist einen Detektionsstrahl auf, der in Fig. 3 durch eine gestrichelt gezeichnete Linie angedeutet sein soll, die sich ausgehend von der Lichtschranke 12 in Richtung des quaderförmigen Objektes 2 erstreckt. In der in Fig. 3 dargestellten Szene wird deshalb durch die Transportbewegung des quaderförmigen Objektes 2 die Lichtschranke 12 die Datenerfassung der Kamera 1, d.h. den Datenstrom 7 der Kamera 1, unmittelbar auslösen. Die Fördereinrichtung 15 umfasst ferner eine Beleuchtungseinheit 13. Die Beleuchtungseinheit 13 beleuchtet insbesondere den Übergangsbereich 17 zwischen zwei Förderabschnitten des Förderbandes 3. Damit wird das Signal zu Rausch Verhältnis des Datenstroms 7 so eingestellt, dass die Auswertung des Datenstroms 7 durch ein neuronales Netz selbst bei wechselnden Lichtverhältnissen erfolgen kann. Die Kamera 1 weist ein Sichtfenster auf, durch das ein Sichtbereich 4 der Kamera 1 festgelegt wird, in dem die Kamera 1 Objekte 2 erfassen kann und der je nach Optik der Kamera 1 in Richtung des Förderbandes 3 verläuft und wie in Fig. 3 durch zwei gestrichelte Linien angedeutet, kegelförmig verlaufen kann.

Ein weiteres, zylinderförmiges Objekt 2, ist im Übergangsbereich 17 des Förderbandes 3 durch die jeweiligen Rollen 16 der Förderbandabschnitte in eine Eigenrotation versetzt, so dass das Objekt 2 nicht länger befördert wird. Die Kamera 1 erfasst die Eigenrotation des Objektes 2 durch Auswerten des optischen Flusses und bestimmt die Eigenrotation des Objektes 2 anhand der Flussvektoren 11, die, nachdem das Objekt 2 durch die Datenverarbeitungseinheit 6 als ein jeweiliges Objekt 2 erkannt wurde, zur Bewegungsrichtung 8 des Objektes 2 zusammengefasst werden. In diesem in Fig. 3 gezeigten Fall gibt die Datenverarbeitungseinheit 6 der Kamera 1 ein Signal 9 aus, das es einem Bediener der Fördereinrichtung 15 erlaubt, dass im Übergangsbereich 17 festgehaltene Objekt 2 zu sehen und insbesondere auch zu lokalisieren. Das Signal 9 umfasst die Information, dass ein Objekt 2 nicht länger gefördert wird und insbesondere auch die Information, wo sich das Objekt 2 in der Fördereinrichtung 15 befindet, und idealerweise auch wie das Objekt 2 aussieht.

### Liste der Bezugszeichen

- 1: Neuromorphe Kamera
- 2: Objekt
- 3: Förderband
- 4: Sichtbereich
- 5: Förderrichtung
- 6: Datenverarbeitungseinheit
- 7: Datenstrom
- 8: Bewegungsrichtung
- 9: Signal
- 10: Pixel
- 11: Flussvektor
- 12: Signalgeber
- 13: Beleuchtungseinheit
- 14: Gehäuse
- 15: Fördereinrichtung
- 16: Rollen
- 17: Übergangsbereich

## Patentansprüche

1. Neuromorphe Kamera (1) zur Bestimmung, ob Objekte (2) auf einem Förderband (3) gefördert werden, mit einem Sichtbereich (4), der eingerichtet ist, die auf dem Förderband (3) in eine Förderrichtung (5) geförderten Objekte (2) zu erfassen, ferner aufweisend eine Datenverarbeitungseinheit (6), die einen Datenstrom (7) der Kamera (1) auswertet, wobei die Datenverarbeitungseinheit (6) aus dem Datenstrom (7) einen optischen Fluss bestimmt, und aus dem optischen Fluss für ein jeweiliges Objekt (2) der geförderten Objekte (2) eine Bewegungsrichtung (8) ermittelt und ein Signal (9) ausgibt, wenn die ermittelte Bewegungsrichtung (8) außerhalb eines zulässigen Bereichs liegt, der durch die Förderrichtung (5) des Förderbandes (3) bestimmt ist und wobei die Datenverarbeitungseinheit (6) mindestens ein neuronales Netz aufweist und das neuronale Netz aus dem Datenstrom (7) der Kamera (1) den optischen Fluss bestimmt, so dass einem Pixel (10) der Kamera (1) ein jeweiliger Flussvektor (11) zugeordnet ist

2. Neuromorphe Kamera (1) nach Anspruch 1, **dadurch gekennzeichnet, dass** die Datenverarbeitungseinheit (6) das jeweilige Objekt (2) bestimmt, indem die Pixel (10), deren Flussvektoren (11) eine ähnliche Magnitude und Richtung aufweisen, zu dem jeweiligen Objekt (2) gruppiert werden.

3. Neuromorphe Kamera (1) nach Anspruch 2, **dadurch gekennzeichnet, dass** die Datenverarbeitungseinheit (6) die Bewegungsrichtung (8) des jeweiligen Objektes (2) durch Mittelwertbildung bestimmt, indem die Datenverarbeitungseinheit (6) über die Richtungen der Flussvektoren (11) der zu dem jeweiligen Objekt (2) gruppierten Pixel (10) mittelt.

4. Neuromorphe Kamera (1) nach Anspruch 3, **dadurch gekennzeichnet, dass** der Mittelwert aus einer Verteilung, insbesondere einer Gauß Verteilung, gebildet ist, die an die Richtungen der Flussvektoren (11) der zu dem jeweiligen Objekt (2) gruppierten Pixel (10) angepasst ist.

5. Neuromorphe Kamera (1) nach Anspruch 1, **dadurch gekennzeichnet, dass** die Datenverarbeitungseinheit (6) die Förderrichtung (5) aus den Bewegungsrichtungen (8) von mindestens zehn geförderten Objekten (2) bestimmt, indem die Datenverarbeitungseinheit (6) über die Richtungen der Flussvektoren (11) der zu den jeweiligen Objekten (2) gruppierten Pixeln (10) mittelt.

6. Neuromorphe Kamera (1) nach Anspruch 1, **dadurch gekennzeichnet, dass** der zulässige Bereich Förderwinkel von 0° bis +/- 15°, 0° bis +/- 25°, 0° bis +/- 35°, 0° bis +/- 45° oder 0° bis +/- 50° umfasst, wobei ein Förderwinkel von 0° der Förderrichtung (5) entspricht.

7. Verwendung einer neuromorphen Kamera (1) nach Anspruch 1, um zu bestimmen, ob Objekte (2) auf einem Förderband (3) in eine Förderrichtung (5) gefördert werden, indem die Kamera (1) so an dem Förderband (3) positioniert wird, dass die auf dem Förderband (3) geförderten Objekte (2) sich durch den Sichtbereich (4) der Kamera (1) bewegen und die Kamera (1) ein Signal (9) ausgibt, wenn die Bewegungsrichtung (8) eines jeweiligen Objektes (2) der geförderten Objekte (2) außerhalb eines durch die Förderrichtung (5) des Förderbands (3) bestimmten zulässigen Bereichs liegt.

8. Verwendung der neuromorphen Kamera (1) nach Anspruch 7, wobei die Kamera so an dem Förderband (3) positioniert wird, dass eine Achse des Koordinatensystems der Kamera (1) mit der Förderrichtung (5) übereinstimmt.

9. Verwendung der neuromorphen Kamera (1) nach Anspruch 8, wobei ein Mittel, insbesondere ein Drehgeber, zur Bestimmung einer Fördergeschwindigkeit des Förderbandes (3) an dem Förderband (3) positioniert wird.

10. Verwendung der neuromorphen Kamera (1) nach Anspruch 8, wobei ein Signalgeber (12), insbesondere eine Lichtschranke (12), den Datenstrom (7) der Kamera (1) auslöst.

11. Verwendung der neuromorphen Kamera (1) nach Anspruch 8, wobei ein Signal zu Rausch Verhältnis durch eine Beleuchtungseinheit bestimmt wird, die den Sichtbereich (4) der Kamera (1) beleuchtet.

12. System aufweisend eine neuromorphe Kamera (1) nach Anspruch 1 und ein Förderband (3) einer Fördereinrichtung (15), wobei die Kamera (1) so an dem Förderband (3) positioniert ist, dass Objekte (2), die auf dem Förderband (3) in eine Förderrichtung (5) bewegt werden, durch den Sichtbereich (4) der Kamera (1) erfasst sind.

13. System nach Anspruch 12, ferner umfassend einen Signalgeber, insbesondere eine Lichtschranke, eine Beleuchtungseinheit und ein Mittel, insbesondere einen Drehgeber, zur Bestimmung der Fördergeschwindigkeit des Förderbands (3).

## Claims

1. Neuromorphic camera (1) for determining whether objects (2) are conveyed on a conveyor belt (3), comprising a field of view (4) configured to detect the objects (2) conveyed on the conveyor belt (3) in a conveying direction (5), further comprising a data processing unit (6) that evaluates a data stream (7) of the camera (1), wherein the data processing unit (6) determines an optical flow from the data stream (7), and determines, from the optical flow, a movement direction (8) for a respective object (2) of the conveyed objects (2) and outputs a signal (9) when the determined movement direction (8) lies outside a permissible range determined by the conveying direction (5) of the conveyor belt (3), and wherein the data processing unit (6) comprises at least one neural network and the neural network determines the optical flow from the data stream (7) of the camera (1) such that a respective flow vector (11) is assigned to a pixel (10) of the camera (1).

2. Neuromorphic camera (1) according to claim 1, **characterised in that** the data processing unit (6) determines the respective object (2) by grouping the pixels (10) whose flow vectors (11) have a similar magnitude and direction into the respective object (2).

3. Neuromorphic camera (1) according to claim 2, **characterised in that** the data processing unit (6) determines the movement direction (8) of the respective object (2) by averaging by averaging over the directions of the flow vectors (11) of the pixels (10) grouped into the respective object (2).

4. Neuromorphic camera (1) according to claim 3, **characterised in that** the average is formed from a distribution, in particular a Gaussian distribution, adapted to the directions of the flow vectors (11) of the pixels (10) grouped into the respective object (2).

5. Neuromorphic camera (1) according to claim 1, **characterised in that** the data processing unit (6) determines the conveying direction (5) from the movement directions (8) of at least ten conveyed objects (2) by averaging over the directions of the flow vectors (11) of the pixels (10) grouped into the respective objects (2).

6. Neuromorphic camera (1) according to claim 1, **characterised in that** the permissible range comprises conveying angles from 0° to +/-15°, 0° to +/-25°, 0° to +/-35°, 0° to +/-45° or 0° to +/-50°, wherein a conveying angle of 0° corresponds to the conveying direction (5).

7. Use of a neuromorphic camera (1) according to claim 1 to determine whether objects (2) are conveyed on a conveyor belt (3) in a conveying direction (5), wherein the camera (1) is positioned on the conveyor belt (3) such that the objects (2) conveyed on the conveyor belt (3) move through the field of view (4) of the camera (1), and the camera (1) outputs a signal (9) when the movement direction (8) of a respective object (2) of the conveyed objects (2) lies outside a permissible range determined by the conveying direction (5) of the conveyor belt (3).

8. Use of the neuromorphic camera (1) according to claim 7, wherein the camera is positioned on the conveyor belt (3) such that an axis of the coordinate system of the camera (1) coincides with the conveying direction (5).

9. Use of the neuromorphic camera (1) according to claim 8, wherein a means, in particular a rotary encoder, for determining a conveying speed of the conveyor belt (3) is positioned on the conveyor belt (3).

10. Use of the neuromorphic camera (1) according to claim 8, wherein a signal generator (12), in particular a light barrier (12), triggers the data stream (7) of the camera (1).

11. Use of the neuromorphic camera (1) according to claim 8, wherein a signal-to-noise ratio is determined by an illumination unit which illuminates the field of view (4) of the camera (1).

12. System comprising a neuromorphic camera (1) according to claim 1 and a conveyor belt (3) of a conveying installation (15), wherein the camera (1) is positioned on the conveyor belt (3) such that objects (2) moved on the conveyor belt (3) in a conveying direction (5) are detected through the field of view (4) of the camera (1).

13. System according to claim 12, further comprising a signal generator, in particular a light barrier, an illumination unit and a means, in particular a rotary encoder, for determining the conveying speed of the conveyor belt (3).

## Revendications

1. Caméra neuromorphique (1) destinée à déterminer si des objets (2) sont convoyés sur une bande transporteuse (3), comprenant un champ de vision (4) configuré pour détecter les objets (2) convoyés sur la bande transporteuse (3) dans une direction de convoyage (5), comprenant en outre une unité de traitement de données (6) qui évalue un flux de données (7) de la caméra (1), l'unité de traitement de données (6) déterminant un flux optique à partir du flux de données (7), déterminant à partir du flux optique une direction de déplacement (8) pour un objet respectif (2) des objets convoyés (2), et émettant un signal (9) lorsque la direction de déplacement (8) déterminée se situe en dehors d'une plage admissible déterminée par la direction de convoyage (5) de la bande transporteuse (3), et l'unité de traitement de données (6) comprenant au moins un réseau neuronal, et le réseau neuronal déterminant le flux optique à partir du flux de données (7) de la caméra (1), de sorte qu'un vecteur de flux respectif (11) est associé à un pixel (10) de la caméra (1).

2. Caméra neuromorphique (1) selon la revendication 1, **caractérisé en ce que** l'unité de traitement de données (6) détermine l'objet respectif (2) en regroupant dans l'objet respectif (2) les pixels (10) dont les vecteurs de flux (11) présentent une magnitude et une direction similaires.

3. Caméra neuromorphique (1) selon la revendication 2, **caractérisé en ce que** l'unité de traitement de données (6) détermine la direction de déplacement (8) de l'objet respectif (2) par moyennage en effectuant une moyenne des directions des vecteurs de flux (11) des pixels (10) regroupés dans l'objet respectif (2).

4. Caméra neuromorphique (1) selon la revendication 3, **caractérisé en ce que** la moyenne est formée à partir d'une distribution, notamment une distribution gaussienne, adaptée aux directions des vecteurs de flux (11) des pixels (10) regroupés dans l'objet respectif (2).

5. Caméra neuromorphique (1) selon la revendication 1, **caractérisé en ce que** l'unité de traitement de données (6) détermine la direction de convoyage (5) à partir des directions de déplacement (8) d'au moins dix objets convoyés (2) en effectuant une moyenne des directions des vecteurs de flux (11) des pixels (10) regroupés dans les objets respectifs (2).

6. Caméra neuromorphique (1) selon la revendication 1, **caractérisé en ce que** la plage admissible comprend des angles de convoyage de 0° à +/-15°, 0° à +/-25°, 0° à +/-35°, 0° à +/-45° ou 0° à +/-50°, un angle de convoyage de 0° correspondant à la direction de convoyage (5).

7. Utilisation d'une caméra neuromorphique (1) selon la revendication 1 afin de déterminer si des objets (2) sont convoyés sur une bande transporteuse (3) dans une direction de convoyage (5), la caméra (1) étant positionnée sur la bande transporteuse (3) de sorte que les objets (2) convoyés sur la bande transporteuse (3) se déplacent à travers le champ de vision (4) de la caméra (1), et la caméra (1) émettant un signal (9) lorsque la direction de déplacement (8) d'un objet respectif (2) des objets convoyés (2) se situe en dehors d'une plage admissible déterminée par la direction de convoyage (5) de la bande transporteuse (3).

8. Utilisation de la caméra neuromorphique (1) selon la revendication 7, la caméra étant positionnée sur la bande transporteuse (3) de sorte qu'un axe du système de coordonnées de la caméra (1) coïncide avec la direction de convoyage (5).

9. Utilisation de la caméra neuromorphique (1) selon la revendication 8, un moyen, notamment un codeur rotatif, destiné à déterminer une vitesse de convoyage de la bande transporteuse (3) étant positionné sur la bande transporteuse (3).

10. Utilisation de la caméra neuromorphique (1) selon la revendication 8, un générateur de signal (12), notamment une barrière lumineuse (12), déclenchant le flux de données (7) de la caméra (1).

11. Utilisation de la caméra neuromorphique (1) selon la revendication 8, un rapport signal/bruit étant déterminé par une unité d'éclairage qui éclaire le champ de vision (4) de la caméra (1).

12. Système comprenant une caméra neuromorphique (1) selon la revendication 1 et une bande transporteuse (3) d'une installation de convoyage (15), la caméra (1) étant positionnée sur la bande transporteuse (3) de sorte que des objets (2) déplacés sur la bande transporteuse (3) dans une direction de convoyage (5) soient détectés à travers le champ de vision (4) de la caméra (1).

13. Système selon la revendication 12, comprenant en outre un générateur de signal, notamment une barrière lumineuse, une unité d'éclairage et un moyen, notamment un codeur rotatif, destiné à déterminer la vitesse de convoyage de la bande transporteuse (3).
